# EUROPÄISCHE PATENTSCHRIFT

(11) **EP 0 917 988 B1**
(45) Veröffentlichungstag und Bekanntmachung des Hinweises auf die Patenterteilung: **29.09.2004**
(21) Anmeldenummer: 98110148.8
(22) Anmeldetag: 04.06.1998
(51) Int. Cl.: B60R 11/02

(54) **Elektroakustische Wandlereinheit**
Electro-acoustic transducer
Transducteur électroacoustique

(30) Priorität: 22.11.1997 DE 19751920
(43) Veröffentlichungstag der Anmeldung: 26.05.1999
(73) Patentinhaber: PVT Präzisions-Verbindungstechnik und Steuerungsbau GmbH, 72135 Dettenhausen (DE)
(72) Erfinder: Trenkle, Elvira, 71144 Steinenbronn (DE)
(74) Vertreter: Patentanwälte Ruff, Wilhelm, Beier, Dauster & Partner

(56) Entgegenhaltungen:
- EP-A- 0 728 619
- FR-A- 1 425 212
- FR-A- 2 691 932
- GB-A- 2 253 782
- US-A- 4 758 047
- US-A- 5 687 230
- PATENT ABSTRACTS OF JAPAN vol. 015, no. 332 (C-0861), 23. August 1991 & JP 03 128007 A (MATSUSHITA ELECTRIC IND CO LTD), 31. Mai 1991
- PATENT ABSTRACTS OF JAPAN vol. 097, no. 004, 30. April 1997 & JP 08 324354 A (TOTSUKA HITOMI), 10. Dezember 1996

## Beschreibung

Die Erfindung betrifft eine elektroakustische Wandlereinheit nach dem Oberbegriff des Anspruchs 1 für eine Freisprechanlage in einem Fahrzeug, insbesondere zum Anschluß an ein Mobiltelefon als Übertragungseinrichtung, wie sie beispielsweise aus der US 5 687 230 A bekannt ist.

Zum Telefonieren in einem Fahrzeug sind Freisprechanlagen sehr weit verbreitet, da hier der Benutzer das Mobiltelefon nicht in der Hand halten muß. Dies ist von großer Bedeutung, um seine ganze Aufmerksamkeit dem Straßenverkehr und dem Steuern des Fahrzeugs widmen zu können.

Bekannte Freisprechanlagen in Fahrzeugen sehen neben einer Art Basisstation, meist bestehend aus einer Halterung für das Mobiltelefon samt eingebauter Freisprechelektronik, ein Mikrofon und einen Lautsprecher vor, die daran anzuschließen sind. Mikrofone bekannter Freisprechanlagen sind üblicherweise an der A-Säule oder der Konsole befestigt, teilweise auch an bzw. hinter dem Lenkrad. Als Lautsprecher werden meist kleinere Baueinheiten verwendet, die entweder sehr aufwendig an der Konsole oder sogar im Fußraum des Beifahrers befestigt werden müssen. Dies wird dadurch bedingt, daß zur Vermeidung von Störungen sowie Rückkoppeln und Nachhallen keine direkte und geradlinige akustische Verbindung zwischen Lautsprecher und Mikrofon der Freisprechanlage auftreten sollte. Vor allem im Voll-Duplex-Betrieb treten diese äußerst störenden Effekte auf. Neben der Anbringung des Mikrofons wird auch die Montage des Lautsprechers an einem unzugänglichen Ort wie dem Fußraum als sehr nachteilig angesehen, unter anderem da er dort sowohl Schmutz als auch Beschädigungsgefahr ausgesetzt ist.

Aus der US-PS 5,587,230 ist es bekannt, einen Lautsprecher integral in einer Kopfstütze eines Autositzes anzuordnen. Ein Mikrofon ist dabei an der Seite der Kopfstütze angebracht. Hierfür ist eine spezielle Kopfstütze vorgesehen.

Aus der GB 2,253,782 ist es bekannt, ein Telefon an der Seite einer Kopfstütze zu befestigen. Auch hierfür ist eine spezielle Kopfstütze vorgesehen.

Aus der JP 3-128007 A ist es lediglich allgemein bekannt, inwiefern ein Gehäuse eines elektronischen Geräts zwischen zwei Kopfstützenträgern angeordnet werden kann. Hierfür ist ein Halter vorgesehen, welcher an zwei Kopfstützenträgern befestigt werden kann. Der Halter weist jedoch keine Verstellmöglichkeit auf.

Aus der US-PS 4,758,047 ist es bekannt, eine Wandlereinheit in einem Gehäuse mit einem Band an einer Kopfstütze anzubringen. Das Band ist dabei um die Rückseite der Kopfstütze geschlungen, während das Gehäuse an der Vorderseite hängt.

### AUFGABE UND LÖSUNG

Es wird als Aufgabe der Erfindung angesehen, eine elektroakustische Wandlereinheit für eine Freisprechanlage zu schaffen, die einfach anbringbar, nachrüstbar und funktionssicher ist.

Diese Aufgabe wird erfindungsgemäß durch eine elektroakustische Wandlereinheit mit den Merkmalen von Anspruch 1 gelöst. Die Wandlereinheit bzw. der Wandler können möglichst nahe am Kopf bzw. Mund oder Ohr einer Person, die in dem Sitz sitzt, und an dem Sitz oder dem Fahrzeug angebracht sein. Im Gegensatz zu einem Kopfaufsatz, z.B. einem Kopfhörer, behindert die Wandlereinheit den Benutzer nicht, bei einer Anbringung hinter dem Kopf wird sie optisch nicht wahrgenommen. Bevorzugt umfaßt die elektroakustische Wandlereinheit mindestens einen Lautsprecher. Durch den sehr kurzen Übertragungsweg zum Ohr ist es möglich, die Lautstärke gering zu halten und in einem Fahrzeug auftretende störende Geräusche zu übertönen.

Die Wandlereinheit weist einen Halter zur Befestigung im Bereich einer Kopfstütze des Sitzes auf, vorzugsweise zumindest teilweise zwischen Kopfstütze und Sitzlehne. Hier bietet sich eine Vielzahl von Befestigungsmöglichkeiten an.

Der Halter ist zur Befestigung zwischen zwei Kopfstützenträgern einer Kopfstütze ausgebildet, wobei die Befestigung, insbesondere manuell, lösbar ist. Somit wird der bei den meisten Fahrzeugsitzen vorhandene Freiraum zwischen seitlichen Kopfstützenträgern und Kopfstütze und Sitzlehne bzw. eines der genannten Bestandteile zur Unterbringung oder Befestigung der Wandlereinheit genutzt. Dazu wird die Wandlereinheit an, insbesondere zumindest teilweise zwischen, zwei Kopfstützenträgern befestigt. Bei üblicherweise säulenartig ausgebildeten Kopfstützenträger ermöglichen sie eine besonders vorteilhafte Befestigung. Die Wandlereinheit ist samt Halter werkzeuglos befestigbar oder lösbar, wobei sie festklemmbar ausgebildet ist.

Nach einer Ausführungsmöglichkeit der Erfindung weist die elektroakustische Wandlereinheit ein Gehäuse zur Aufnahme wenigstens eines Lautsprechers auf. Bevorzugt ist dieses aus Sicherheitsgründen nach außen schlagdämpfend, vorzugsweise durch eine angebrachte oder ummantelnde Polsterung. Möglich ist auch ein Gehäuse aus einem schlagdämpfenden Material, es eignen sich besonders Hartschaummaterialien o. dgl. Besonders die Bereiche, die im befestigten Zustand nach vorne und nach hinten in Fahrzeuglängsrichtung gerichtet sind, können aus Sicherheitsgründen nachgiebig, vorzugsweise gepolstert, sein.

Bei einer besonders bevorzugten Ausgestaltungsmöglichkeit der Erfindung umfaßt das Gehäuse wenigstens einen zur Aufnahme wenigstens eines Wandlers bzw. Lautsprechers ausgebildeten Hohlraum, der vorzugsweise als Resonatorraum zur Schallverstärkung für einen Lautsprecher gestaltet ist. Zur verbesserten Schallabstrahlung kann das Gehäuse bzw. der Hohlraum wenigstens eine Schallaustrittsöffnung aufweisen, die insbesondere nach vorne ausrichtbar sein kann. Durch eine demgemäß erzielte gerichtete Schallabstrahlung in einer gewünschten Richtung, bevorzugt in Richtung des Ohres bzw. nach vorne, kann bei geringer Leistung bzw. Lautstärke des Lautsprechers für die Bedienungsperson eine hervorragende Verständlichkeit erreicht werden.

Als Lautsprecher kann ein üblicher Membran-Lautsprecher verwendet werden, der als Massenfertigungsbauteil kostengünstig ist. Alternativ kann ein piezoelektrischer Lautsprecher vorgesehen sein, zu dessen Vorzügen geringe Baugröße, minimale Verschleißanfälligkeit, geringer Energieverbrauch, geringe Anfälligkeit gegenüber in einem Fahrzeug entstehenden elektromagnetischen Feldern sowie ein dem Frequenzbereich der menschlichen Sprache gut entsprechender Frequenzverlauf zählen.

Die Wandlereinheit ist mittels der Halterung zwischen zwei Kopfstützenträgern festklemmbar, insbesondere selbstarretierend, wobei sie vorzugsweise mit Aufnahmen bzw. Ausnehmungen für Kopfstützenträger versehen sein kann. Da der Abstand der Kopfstützenträger bei einer Höhenverstellung der Kopfstütze gleich bleibt, erfolgt eine Befestigung vorteilhaft daran. Durch Aufnahmen bzw. Ausnehmungen ist es möglich, daß die Wandlereinheit bzw. ihr Gehäuse die Kopfstützenträger zumindest teilweise umfassen und so eine ausreichend sichere Verbindung herstellen. Besonders bevorzugt kann die Wandlereinheit bzw. ihr Gehäuse längenveränderlich sein, insbesondere teleskopartig längenveränderlich. Alternativ kann sie eine elastische Längenveränderlichkeit eines inneren Bereiches des Gehäuses aufweisen, vorzugsweise entlang der Längsachse des Gehäuses. So ist eine Anpassung an verschiedene Abstände von Befestigungspunkten, beispielsweise Kopfstützenträgern, möglich. Es kann ein universeller Nachrüstsatz hergestellt werden, der für viele Varianten von Fahrzeugsitzen verwendbar ist. Dabei kann die Wandlereinheit bzw. der Halter eine Längsfederung, vorzugsweise für das Gehäuse, aufweisen, wodurch sie mit Vorspannung an, insbesondere zwischen, den Kopfstützenträgern festklemmbar ist. Ebenso kann sie zwischen Sitzlehne und Kopfstütze oder in einem üblichen Ausschnitt in der Kopfstütze befestigt oder festgeklemmt werden. Die Längsfederung unterstützt die Arretierungs- bzw. Festklemmwirkung. Möglich ist weiters eine Unterbringung in der Kopfstütze selber.

Das Gehäuse kann mindestens zwei Teile aufweisen z.B. aus zwei Schalen bestehen. Ein Teil kann mit dem übrigen Gehäuse gelenkig verbunden sein, insbesondere gegenüber diesem verschiebbar oder verschwenkbar. Ein Teil enthält vorzugsweise mindestens einen Lautsprecher, wodurch eine vorteilhafte Lenkung der Schallwellen in Richtung des Ohres oder des Kopfes möglich ist. Mindestens eine Schalldurchtrittsöffnung und/oder wenigstens ein Lautsprecher kann ausrichtbar sein, z.B. derart, daß Schall in Richtung des Fahrzeugvorderteiles abstrahlbar ist, vorzugsweise etwa in Richtung eines Ohres einer in dem Sitz sitzenden Person.

Alternativ zu einer Mikrofoneinrichtung als einzige elektroakustische Wandlereinheit kann bei einer Ausgestaltung der Erfindung einem Lautsprecher als Wandler zusätzlich eine Mikrofoneinrichtung zugeordnet sein. Mindestens ein Mikrofon ist, vorzugsweise mittels einer dafür ausgebildeten Mikrofonhalterung, an dem Halter bzw. dem Gehäuse befestigbar. Auf diese Weise ist ähnlich vorteilhaft wie der Lautsprecher das Mikrofon in Kopfnähe vorhanden, ohne daß es von der Bedienungsperson gehalten oder getragen werden muß.

Die Mikrofoneinrichtung bzw. eine Mikrofonhalterung sind bevorzugt derart ausgebildet, daß Position und/oder Ausrichtung eines Mikrofons beliebig festlegbar sind. Das kann durch einen Haltearm nach Art eines Schwanenhalses oder insbesondere in Form eines biegeweichen und formstabilen Kabels möglich sein.

Zum Aufbau einer kompletten Freisprechanlage in direkter Verbindung mit dem elektroakustischen Wandler kann diesem eine Freisprechelektronik zugeordnet sein, die insbesondere in dem Gehäuse oder an dem Halter angeordnet sein kann. In Verbindung mit einem direkt zugeordneten Mikrofon erhält man so eine kompakte und dennoch einfach zu montierende und besonders vorteilhaft verwendbare Freisprechanlage. Aufwendige Anschlüsse an eine externe Freisprechanlage können entfallen. Bei einer Ausgestaltungsmöglichkeit der Erfindung kann die Wandlereinheit, bevorzugt mittels eines Anschlußkabels, mit einem Mobiltelefon, Autotelefon oder einer anderen drahtlosen Übertragungseinrichtung signalübertragend verbindbar sein. Möglich ist hier auch eine drahtlose Signalübertragung, beispielsweise durch eine Infrarotübertragungsstrecke zwischen Wandlereinheit und Telefon bzw. dessen Basis- oder Aufnahmestation.

Bei einer bevorzugten Ausgestaltung der Erfindung ist wenigstens ein Lautsprecher hinter und ein Mikrofon vor dem Kopf bzw. dem Mund einer in dem Sitz sitzenden Person befestigbar. Somit liegen diese nicht nur räumlich nahe an Ohr bzw. Mund, zusätzlich werden durch die Unterbrechung einer direkten Übertragungslinie zwischen Lautsprecher und Mikrofon durch den Kopf unerwünschte Störeffekte einer Freisprechanlage wie Rückkoppeln oder Nachhallen vermieden.

Um eine vielseitige Wandlereinheit zu schaffen, kann ihr eine eigene elektrische Energieversorgung zugeordnet sein, wobei sie bzw. ein Halter oder ein Gehäuse insbesondere eine Aufnahme für einen einsetzbaren Akkumulator aufweisen können. Alternativ oder zusätzlich ist eine Energieversorgung aus dem Mobiltelefon möglich.

Eine bevorzugte Ausführung der Erfindung kann ein längliches, zumindest teilweise federnd zusammendrückbares Gehäuse mit einem Lautsprecher an einem Ende vorsehen, das zwei Ausnehmungen an den beiden Enden aufweist, wobei in einer langen Ausnehmung eine Längsfedereinrichtung angeordnet ist. Bei zusammengedrückter Längsfederung ist die Wandlereinheit mittels der seitlichen Ausnehmungen zwischen zwei Kopfstützenträger eines Fahrzeugsitzes einführbar und dort selbsttätig und in Fahrzeuglängsrichtung formschlüssig arretierbar. Eine solche Wandlereinheit ist auf einfache Weise manuell befestigbar und wieder lösbar. Zur Erleichterung des Einsteigens in das Fahrzeug kann vorzugsweise der Teil mit dem Lautsprecher zur Fahrzeugmitte hin weisen, ebenso besonders vorteilhaft eine Mikrofoneinrichtung samt Mikrofonhalterung besitzen. Das Gehäuse kann länger sein als der Abstand der Kopfstützenträger, wobei es schräg eingeführt wird.

Zur Anbringung an Fahrzeugsitzen, beispielsweise mit Kopfstützen ohne Träger, z.B. Integralsitzen, kann eine Befestigung mit einer textilen Haftverbindung verwendet werden. Möglich wäre ein Umschlingen des oberen Sitzlehnenbereiches bzw. des Kopfstützenbereiches mit einem derartigen Haftband, woran die Wandlereinheit befestigt werden kann. Eine andere Möglichkeit ist die Anordnung in oder an einer Umhüllung, die den oberen Sitz- oder Kopfstützenbereich zumindest teilweise umgreift, und beispielsweise nach Art eines textilen Überzugs o.dgl. samt Aufnahme für die Wandlereinheit ausgebildet ist. Eine dauerhafte Befestigung eines elektroakustischen Wandlers an oder in einem Fahrzeugsitz durch Verschraubung o. dgl. ist möglich. Dabei ist eine für das Auge unsichtbare Verlegung eines Anschlußkabels an eine Übertragungseinrichtung, bevorzugt ein Mobiltelefon, oder eine Freisprechanlage innerhalb des Fahrzeugsitzes bzw. an dessen Rückseite möglich.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### KURZBESCHREIBUNG DER ZEICHNUNGEN

Mehrere Ausführungsbeispiele der Erfindung sind in den Zeichnungen dargestellt und werden im folgenden näher erläutert. In den Zeichnungen zeigen:
- Fig. 1: eine Ansicht von vorne eines Lautsprechers mit Gehäuse als erfindungsgemäße elektroakustische Wandlereinheit mit einem flexiblen Mikrofonträger, die zwischen zwei Kopfstützenträgern eines Autositzes eingeklemmt ist,
- Fig. 2: die Wandlereinheit mit Gehäuse aus Fig. 1 von oben samt schematisch dargestelltem Kopf einer in dem Sitz befindlichen Person,
- Fig. 3: eine alternative Ausführung, bei der eine Federung in einem seitlichen Längsschlitz des Gehäuses angebracht ist.

### BESCHREIBUNG DER AUSFÜHRUNGSBEISPIELE

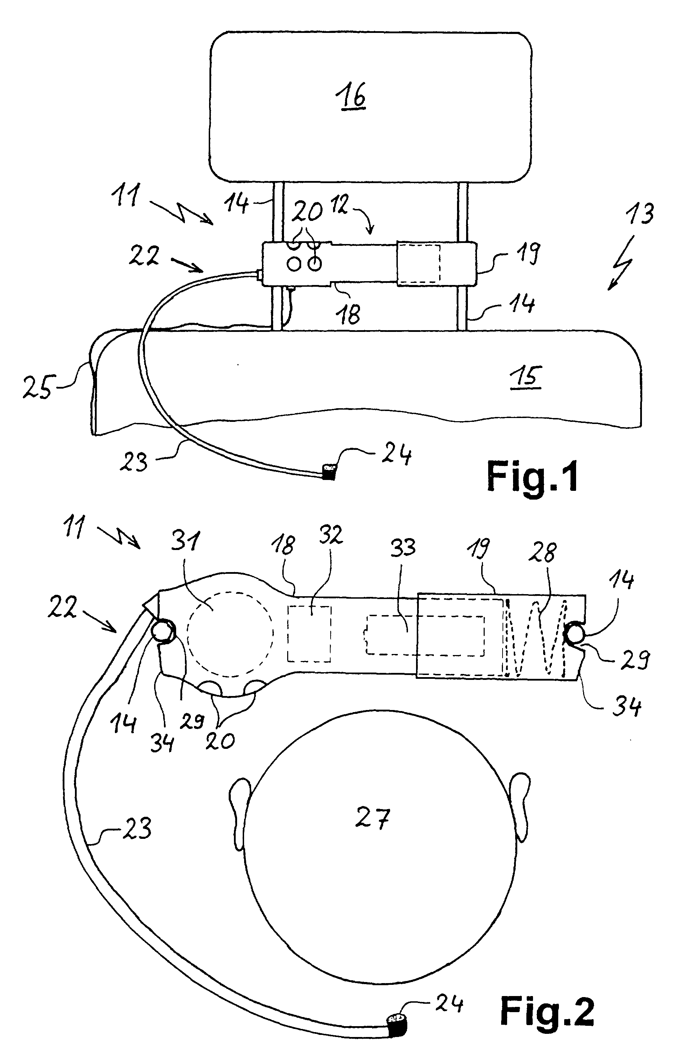

Die Fig. 1 zeigt eine elektroakustische Wandlereinheit 11, deren auch als Gehäuse bezeichneter Halter 12 an einem Fahrzeugsitz 13 befestigt ist, und zwar an bzw. zwischen zwei Kopfstützenträgern 14, die aus einer Sitzlehne 15 ragen und eine Kopfstütze 16 tragen.

Das Gehäuse besteht aus zwei Teilen, einem Lautsprecherteil 18 und einer Gehäusekappe 19, die zumindest teilweise über den Lautsprecherteil geführt ist. Die Führung erfolgt bevorzugt derart, daß eine Relativbewegung der beiden Gehäuseteile 18 und 19 nur in deren Längsrichtung möglich ist.

In dem linken Bereich des Lautsprecherteils 18 ist ein nicht dargestellter Lautsprecher in einem als Resonatorraum dienenden Hohlraum enthalten, wobei über Schallaustrittsöffnungen 20 die Ableitung des von dem Lautsprecher erzeugten Schalls aus dem Lautsprecherteil 18 heraus erfolgt. Die Form der Schallaustrittsöffnungen 20 ist nicht wie dargestellt auf eine Kreisform beschränkt, möglich sind alle möglichen Formen, ebenso wie eine Abdeckung der Schallaustrittsöffnungen mittels Gewebe o. dgl.

Seitlich ist an den Lautsprecherteil 18 des Gehäuses 12 eine Mikrofonhalterung 22 angebracht, die einen langen, dünnen und flexiblen Arm 23 aufweist, dessen freies Ende ein Mikrofon 24 trägt. Es ist in etwa der Kopfstütze 16 zugewandt, da sich der Mund einer in dem Fahrzeugsitz 13 befindlichen Bedienungsperson voraussichtlich in dieser Richtung befindet.

Über ein Anschlußkabel 25 wird die Wandlereinheit 11 angeschlossen. Bei der in den Figuren 1 und 2 gezeigten Ausführung, die sowohl Lautsprecher als auch Mikrofon 24 sowie eine Freisprechelektronik und eine Energieversorgung enthält, dient das Anschlußkabel 25 lediglich zur Verbindung mit einem Mobiltelefon als Übertragungseinrichtung. Je nach Ausführung kann damit auch eine Verbindung einer externen Freisprechelektronik nur mit einem Lautsprecher und/oder einem Mikrofon 24 als elektroakustischem Wandler in dem Gehäuse 12 erfolgen.

Die Fig. 2 zeigt in Vergrößerung die Einrichtung aus Fig. 1 von oben mit einem schematisch dargestellten Kopf 27 einer Bedienungsperson. Hier wird der zweiteilige Aufbau des Gehäuses 12 mit Lautsprecherteil 18 und Gehäusekappe 19 deutlich. Der Lautsprecherteil 18 greift zumindest teilweise in die überwiegend hohl ausgeführte Gehäusekappe 19 ein, wobei er mittels einer an seiner Stirnfläche anliegenden und gegen den Boden der Gehäusekappe 19 drückenden Schraubenfeder 28 gefedert ist. Auf diese Weise kann die Länge des Gehäuses 12 und somit der Abstand von Ausnehmungen 29, die an den Seitenenden des Gehäuses angeordnet sind, in einem weiten Bereich verändert werden, was eine Anpassung an verschiedene Abstände der Kopfstützenträger 14 bei verschiedenen Fahrzeugsitzmodellen ermöglicht. Des weiteren wird in Zusammenwirkung mit der speziellen Ausformung der Ausnehmungen 29 eine zumindest in Fahrzeuglängsrichtung (entspricht in der Fig. 2 der Längsrichtung des Blattes von oben nach unten) formschlüssige Verbindung des Gehäuses 12 mit den Kopfstützenträgern 14 erzielt. Durch die leicht nach hinten gezogenen Ausnehmungen 29 wird die Arretierungswirkung der Träger 14 mit den Ausnehmungen 29 in einem Fahrzeug bzgl. einer von hinten, in der Fig. 2 von oben, auftretenden Krafteinwirkung sogar noch verstärkt. Dies verbessert die Unfallsicherheit, da sich die Wandlereinheit 11 bzw. das Gehäuse 12 bei einem Auffahrunfall nicht lösen und eine in dem Fahrzeug oder dem Sitz befindliche Person verletzen können.

In der Fig. 2 ist in dem dickeren Teil des Lautsprecherteils 18 gestrichelt ein Membran-Lautsprecher 31 dargestellt, dessen in dem Resonatorraum des Lautsprechers erzeugter Schall über die Schalldurchtrittsöffnung 20 direkt in Richtung eines Kopfes 27 einer Bedienungsperson abgestrahlt wird. Des weiteren sind in dem Lautsprecherteil 18 gestrichelt dargestellt eine Freisprechelektronik 32 sowie ein Akkumulator 33, so daß in Verbindung mit dem Mikrofon 24 eine komplette Freisprecheinrichtung gegeben ist. Es braucht lediglich über das Anschlußkabel 25 eine signalübertragende Verbindung mit einem Mobiltelefon als Übertragungseinrichtung hergestellt werden.

Wie in der Fig. 2 zu sehen ist, ist zur Erhöhung der Sicherheit die Mikrofonhalterung 22 an einer Stelle hinter der Ausnehmung 29 in dem Lautsprecherteil 18 angebracht. Dort verhindert sie auf diese Weise eine Bewegung des Gehäuses 12 in diesem Bereich vor den Kopfstützenträger 14 in Richtung des Kopfes 27.

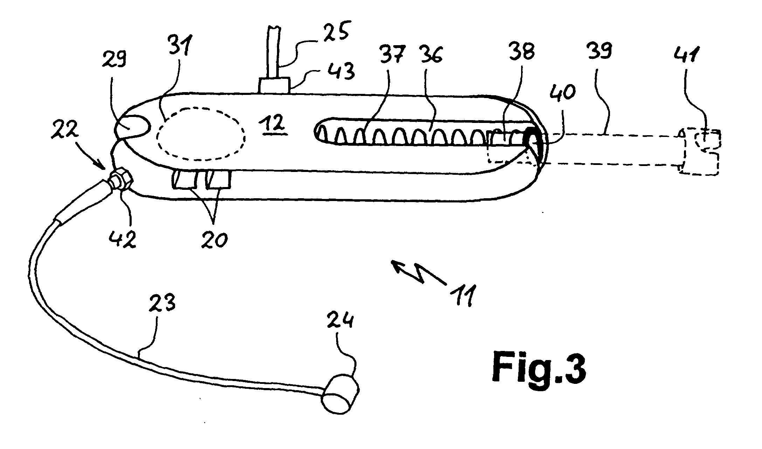

Die Fig. 3 zeigt in Schrägansicht eine alternative Ausführung, bei der in einem seitlichen Längsschlitz 36 eine lange Spiralfeder 37 sitzt, die links an dem Gehäuse 12 anliegt. Zum Ausgang des Schlitzes hin ist ein Nippel 38 eingesetzt, mit dem die Spiralfeder 37 an einem Kopfstützenträger anliegen kann. Gestrichelt dargestellt ist ein Längenadapter 39, der in eine Öffnung 40 in dem Nippel 38 eingesteckt werden kann für besonders weit auseinanderstehende Kopfstützenträger. Der Längenadapter weist an seinem freien Ende eine ähnlich den anderen Ausnehmungen 29 gestaltete Ausnehmung 41 auf.

Das Gehäuse enthält einen gestrichelt dargestellten Lautsprecher 31 sowie zwei Schallaustrittsöffnungen 20. Mit einer Schraubverbindung 42 ist eine Mikrofonhalterung 22 mit einem flexiblen Arm 23 befestigt und angeschlossen, die das Mikrofon 24 trägt. Das Anschlußkabel 25 ist an der abgewandten Längsseite, die im eingebauten Zustand in Richtung des Fahrzeughinterteils weist, mit einem Anschlußstecker 43 angeschlossen.

Der Längsschlitz 36 ist schmäler als der Durchmesser der Spiralfeder und an seinen Innenwandungen ausgehöhlt, so daß Spiralfeder 37 und Nippel 38 sicher in dem Schlitz geführt sind und nicht herausgedrückt werden können. Nicht dargestellte Anschläge am äußeren Ende des Schlitzes 36 halten Feder und Nippel in dem Gehäuse 12.

### FUNKTION

Da eine Anwendung der Erfindung einen Nachrüstsatz für Besitzer eines Mobiltelefons bildet, die eine Freisprechanlage selber in ihrem Auto installieren möchten, kann eine elektroakustische Wandlereinheit bevorzugt gemäß den Figuren 1 bis 3 aufgebaut sein. Herstellerseitig werden Lautsprecher 31 und Freisprechelektronik 32 in den Lautsprecherteil 18 eingebaut und angeschlossen, sowie mit einem Anschlußkabel 25 und dem Mikrofon 24 verbunden. Der Anschluß des Mikrofons 24 an die Freisprechelektronik 32 erfolgt vorzugsweise über ein in dem Arm 23 der Mikrofonhalterung 22 verlaufendes Koaxialkabel, das bei einer Ausführung der Erfindung auch im wesentlichen den Arm bilden kann. Die Gehäusekappe 19 enthält keine Bauteile oder Baugruppen, die für die Funktion der Freisprechanlage nötig sind. Sie bildet zusammen mit der Feder 28 lediglich eine Art Längenadapter für das Gehäuse 12 sowie eine Arretierungsmöglichkeit für die ganze Einrichtung.

Zur Inbetriebnahme setzt ein Benutzer lediglich einen Akkumulator o.dgl. in das Gehäuse 12 bzw. den Lautsprecherteil 18 ein, der vorteilhaft unabhängig von einer Gehäusekappe 19 arretierbar sein kann. Anschließend verschließt er das Gehäuse bzw. führt die die Schraubenfeder enthaltende Gehäusekappe über das Ende des Lautsprecherteils, und setzt das Gehäuse 12 von hinten zwischen die beiden Kopfstützenträger 14 des Fahrzeugsitzes 13 ein. Beim Anbringen muß er das Gehäuse 12 bzw. die Längsfederung so weit zusammendrücken, daß es zwischen die Kopfstützenträger 14 geführt werden kann, bis die Ausnehmungen 29/36 zumindest teilweise um die Kopfstützenträger greifen. Dieses Einführen kann durch eine Abschrägung 34 der Enden des Gehäuses 12 in Einführrichtung erleichtert werden oder das Gehäuse wird in einer senkrechten Ebene gekippt eingesetzt. Durch das Loslassen der Gehäuseteile werden diese aufgrund der Federkraft der Längsfedereinrichtung auseinandergedrückt und arretieren das Gehäuse 12 sicher an den Kopfstützenträgern 14.

Je nach Kopfposition kann die Lautsprechereinrichtung 11 entlang der Kopfstützenträger 14 in eine für die Bedienungsperson optimale Position gebracht werden. Abschließend ist lediglich das Anschlußkabel 25 mit dem Mobiltelefon bzw. dessen Basisstation in dem Fahrzeug zu verbinden. Wie in Fig. 1 dargestellt, kann sich das Mikrofon 24 samt dem größten Teil des Trägerarmes 23 ein Stück unterhalb der Kopfstütze 16 und somit des Kopfes 27 befinden. Dies bietet den Vorteil, daß sich bei einem Unfall, evtl. mit Auslösung eines Airbags, das Mikrofon 24 nicht direkt vor dem Kopf 27 bzw. dem Gesicht befindet und somit keine Gefahrenquelle darstellt. Eine Polsterung senkt die Verletzungsgefahr weiter.

## Patentansprüche

1. Elektroakustische Wandlereinheit (11) für eine Freisprechanlage in einem Fahrzeug, wobei die Wandlereinheit (11) zur Anordnung im oberen Sitzlehnenbereich (15) eines Sitzes (13) im Bereich einer Kopfstütze (16) des Sitzes (13) ausgebildet ist und einen Halter (12) aufweist und wobei die Kopfstütze (16) von zwei Kopfstützträgern (14) getragen ist, **dadurch gekennzeichnet, dass** die elektroakustische Wandlereinheit (11) mittels des Halters (12) werkzeuglos an den zwei Kopfstützträgern (14) befestigbar und von diesen lösbar ist, wozu der Halter (12) längenveränderlich zur Festklemmung der elektroakustischen Wandlereinheit (11) zwischen den zwei Kopfstützträgern (14) ausgeführt ist.

2. Elektroakustische Wandlereinheit nach Anspruch 1, **dadurch gekennzeichnet, daß** sie mindestens einen Lautsprecher (31) aufweist.

3. Elektroakustische Wandlereinheit nach Anspruch 1, **dadurch gekennzeichnet, daß** der Halter Teil eines Gehäuses (12) ist.

4. Elektroakustische Wandlereinheit nach Anspruch 1 oder 3, **dadurch gekennzeichnet, daß** sie selbstarretierend festklemmbar, ist, wobei der Halter mit Aufnahmen (29, 36) für die Kopfstützenträger versehen ist.

5. Elektroakustische Wandlereinheit nach Anspruch 3, **dadurch gekennzeichnet, daß** sie ein Gehäuse (12) mit wenigstens einem Lautsprecher (31) aufweist, wobei das Gehäuse (12) einen zur Aufnahme des Lautsprechers ausgebildeten Hohlraum mit wenigstens einer Schallaustrittsöffnung (20) umfaßt.

6. Elektroakustische Wandlereinheit nach Anspruch 3, **dadurch gekennzeichnet, daß** das Gehäuse (12) längenveränderlich ist, wobei die Wandlereinheit eine Längsfederung zur Festklemmung mit Vorspannung aufweist.

7. Elektroakustische Wandlereinheit nach Anspruch 3, **dadurch gekennzeichnet, daß** das Gehäuse (12) oder der Halter mindestens zwei Teile aufweist, wobei ein Teil mit dem übrigen Gehäuse beweglich verbunden ist.

8. Elektroakustische Wandlereinheit nach einem der Ansprüche 2 bis 7, **dadurch gekennzeichnet, daß** mindestens ein Lautsprecher (31) oder wenigstens eine Schalldurchtrittsöffnung (20) gegenüber der Wandlereinheit (11) ausrichtbar ist, derart, daß Schall des Lautsprechers in Richtung des Fahrzeugvorderteiles abstrahlbar ist.

9. Elektroakustische Wandlereinheit nach Anspruch 3, **dadurch gekennzeichnet, daß** ihr eine Mikrofoneinrichtung zugeordnet ist mit mindestens einem Mikrofon (24), die mittels einer Mikrofonhalterung (22) an dem Gehäuse (12) oder dem Halter befestigbar ist, wobei die Mikrofoneinrichtung derart ausgebildet ist, daß Position oder Ausrichtung des Mikrofons (24) variabel festlegbar sind.

10. Elektroakustische Wandlereinheit nach Anspruch 3, **dadurch gekennzeichnet, daß** ihr eine Freisprechelektronik (32) zugeordnet ist, die in dem Gehäuse (12) untergebracht ist, oder eine eigene Energieversorgung zugeordnet ist.

11. Elektroakustische Wandlereinheit nach einem der vorhergehenden Ansprüche, **dadurch gekennzeichnet, daß** sie mittels einem Anschlußkabel(25) signalübertragend mit einem Mobiltelefon oder Autotelefon verbindbar ist.

## Claims

1. Electroacoustic transducer unit (11) for a handsfree telephone system in a vehicle, the transducer unit (11) being constructed for locating in the upper seat back area (15) of a seat (13) in the vicinity of a headrest (16) of the seat (13) and having a holder (12), the headrest (16) being supported by two headrest supports (14), **characterized in that** the electroacoustic transducer unit (11) can be fastened by means of the holder (12) and without tools to the two headrest supports (14) and can be detached therefrom and for this purpose the holder (12) is constructed in length-variable manner for fixing the electroacoustic transducer unit (11) between the two headrest supports (14).

2. Electroacoustic transducer unit according to claim 1, **characterized in that** it has at least one loudspeaker (31).

3. Electroacoustic transducer unit abcording to claim 1, **characterized in that** the holder is part of a casing (12).

4. Electroacoustic transducer unit according to claim 1 or 3, **characterized in that** it can be fixed in self-locking manner, the holder being provided with receptacles (29, 36) for the headrest supports.

5. Electroacoustic transducer unit according to claim 3, **characterized in that** it has a casing (12) with at least one loudspeaker (31), the casing (12) comprising a cavity with at least one sound exit opening (20) constructed for receiving the loudspeaker.

6. Electroacoustic transducer unit according to claim 3, **characterized in that** the casing (12) is length-variable and the transducer unit has a longitudinal resilience for fixing with prestress.

7. Electroacoustic transducer unit according to claim 3, **characterized in that** the casing (12) or holder has at least two parts, one part being movably connected to the remaining casing.

8. Electroacoustic transducer unit according to one of the claims 2 to 7, **characterized in that** at least one loudspeaker (31) or at least one sound exit opening (20) can be oriented with respect to the transducer unit (11) in such a way that the loudspeaker sound can be emitted in the direction of the front of the vehicle.

9. Electroacoustic transducer unit according to claim 3, **characterized in that** with it is associated a microphone means having at least one microphone (24), which can be fastened by a microphone mounting (22) to the casing (12) or the holder, the microphone means being constructed in such a way that the position or orientation of the microphone (24) can be secured in a variable manner.

10. Electroacoustic transducer unit according to claim 3, **characterized in that** with it is associated a handsfree telephone electronics (32) housed in the casing (12) or it is provided with its own power supply.

11. Electroacoustic transducer unit according to one of the preceding claims, **characterized in that** it can be connected in signal-transmitting manner by means of a connecting cable (25) to a mobile or car telephone.

## Revendications

1. Unité transducteur électroacoustique (11) pour un téléphone mains libres dans un véhicule, sachant que l'unité transducteur électroacoustique (11) est conçue pour être disposée sur la partie supérieure du dossier (15) d'un siège (13) dans la zone de l'appui-tête (16) du siège (13) et présente un module de fixation (12) et sachant que l'appui-tête (16) est porté par deux barres de support (14),
**caractérisée en ce que** l'unité électroacoustique (11) peut être, au moyen du module de fixation (12), fixée aux deux barres de support (14) et détachée de celles-ci sans aucun outil, le module de fixation (12) étant réglable en longueur afin de bloquer l'unité électroacoustique (11) entre les deux barres de support (14).

2. Unité transducteur électroacoustique selon la revendication 1, **caractérisée en ce qu'**elle présente au moins un haut-parleur (31).

3. Unité transducteur électroacoustique selon la revendication 1, **caractérisée en ce que** le module de fixation fait partie d'un boîtier (12).

4. Unité transducteur électroacoustique selon la revendication 1 ou 3, **caractérisée en ce qu'**elle se fixe de manière autobloquante, sachant que le module de fixation est pourvu de logements (29, 36) pour les barres de support de l'appui-tête.

5. Unité transducteur électroacoustique selon la revendication 3, **caractérisée en ce qu'**elle présente un boîtier (12) avec au moins un haut-parleur (31), sachant que le boîtier (12) comprend une cavité destinée à accueillir le haut-parleur avec au moins un pavillon (20).

6. Unité transducteur électroacoustique selon la revendication 3, **caractérisée en ce que** le boîtier (12) est variable en longueur, sachant que l'unité électroacoustique présente une suspension à ressort longitudinale pour la fixation sous précontrainte.

7. Unité transducteur électroacoustique selon la revendication 3, **caractérisée en ce que** le boîtier (12) ou le module de fixation présente au moins deux parties, sachant qu'une partie est attachée de manière mobile au reste du boîtier.

8. Unité transducteur électroacoustique selon l'une des revendications 2 à 7, **caractérisée en ce qu'**au moins un haut-parleur (31) ou au moins un pavillon (20) est orienté vers l'avant de l'unité transducteur électroacoustique (11), de façon à ce que le son du haut-parleur soit émis en direction de la partie avant du véhicule.

9. Unité transducteur électroacoustique selon la revendication 3, **caractérisée en ce qu'**un dispositif microphonique avec au moins un microphone (24) lui est adjoint, qui est fixé au boîtier (12) ou au module de fixation au moyen d'une attache microphonique (22), sachant que le dispositif microphonique est conçu de façon à ce que la position ou la direction du microphone (24) puisse être définie de manière variable.

10. Unité transducteur électroacoustique selon la revendication 3, **caractérisée en ce qu'**une électronique mains libres (32) logée dans le boîtier (12) ou une alimentation en énergie particulière lui est adjointe.

11. Unité transducteur électroacoustique selon l'une des revendications précédentes, **caractérisée en ce qu'**elle est connectable à un téléphone mobile ou à un téléphone de voiture par transmission de signaux au moyen d'un câble de raccordement (25).
